# EUROPEAN PATENT SPECIFICATION

(11) **EP 0 573 232 B1**
(45) Date of publication and mention of the grant of the patent: **14.01.1998**
(21) Application number: 93304187.3
(22) Date of filing: 28.05.1993
(51) Int. Cl.: B29C 45/00

(54) **Injection molding process, mold for injection molding, and injection-molded article**
Spritzgiessverfahren, Spritzgiessform und spritzgegossener Gegenstand
Procédé de moulage par injection, moule d'injection et article moulé par injection

(30) Priority: 05.06.1992 JP 145791/92
(43) Date of publication of application: 08.12.1993
(73) Proprietor: POLYPLASTICS CO. LTD., Chuo-Ku Osaka-shi Osaka 541 (JP)
(72) Inventor: Miyazaki, Hirotaka, Fuji-shi, Shizuoka (JP); Sakai, Hiromitsu, Tenpaku-ku, Nagoya-shi, Aichi (JP); Okada, Tsuneyoshi, Kawasaki-shi, Kanagawa (JP)
(74) Representative: Jackson, Peter

(56) References cited:
- EP-A- 0 362 648
- EP-A- 0 508 732
- WO-A-80/00814
- JP-A-48 071 459
- PATENT ABSTRACTS OF JAPAN vol. 14, no. 29 (M-922)(3972) 19 January 1990 & JP-A-01 267 015 (MAZDA MOTOR CORP.)

## Description

The present invention relates to an improved injection molding process. More particularly, the improvements reside in considerable increases in the strength of welds within and at the periphery of injection moldings of thermoplastic resins.

In injection molding, as the resin is injected into a mold cavity it may divide into streams which then reunite in the form of a weld. The dividing may be caused by a core or the like provided in the mold cavity or, if the article being molded has a non-uniform thicknesses, by differences in the resin flows rates between those in large thickness regions and those in small thickness regions. Such a weld is likely to occur as a result of one or both of the mentioned above and it is therefore often difficult to obtain a molded product of complicated configuration, as is required for many practicable articles, moldings but which is free from welds. Welds not only degrade the appearance of a molding due to the occurrence of streaky pattern known as "weld mark", but also cause a serious problem in that the strength of a molding is much lower than that inherently possessed by the resin. The lower strength at the "weld" arises largely because the divided resin streams are merely united by fusing and unification but without any uniform mixing of the resin streams.

For coping with the above-mentioned problem of strength lowering at welds, a molding process has been proposed in Japanese Patent Publication-A No. 71459/1973, in which a resin is injected into a mold having a resin reservoir provided at positions where a weld occurs and the resin introduced into the resin reservoir is forced back into the mold to improve the weld strength. Further, in Japanese Patent Publication-A No. 202414/1990, another molding process has been proposed, in which a resin is injected into a mold through a plurality of gates each provided with a valve so that a plurality of the produced resin streams are united to form welds and thereafter the valve is operated so as to cause a pressure difference between the resin streams in an attempt to disturb the welds and accordingly improve their strength.

However, in the former process (Japanese Patent Publication-A No. 71459/1973), it is difficult to disturb the orientation of the resin and filler at the welds by producing satisfactory resin streams at the welds, so that the strength of the welds cannot be satisfactorily improved. On the other hand, in the latter process (Japanese Patent Publication-A No. 202414/1990), the structures of the mold and the apparatus are extremely complicated, so that not only are the apparatus costs unfavorably high, but also the control of the valves to obtain advantageous effects is difficult.

EP-A-362,648 discloses an injection molding process for thermoplastic resin, which uses a mold having a mold cavity with an internal shape which divides the injected resin into streams which subsequently reunite and weld together within the cavity which uses a mold provided with a resin reservoir protruding therefrom adjacent a region at which the streams reunite. The resin reservoir has a retractable piston (9), for feeding molten resin into the mold to fill the cavity by advancing the piston to force resin from the reservoir into the cavity.

The present inventor has found a process for effectively improving weld strength or the like by causing the migration of the resin at the welds while the resin maintains its flowability in the mold cavity after the formation of welds so as to disturb the orientation of the resin and filler at the welds.

The invention provides an injection molding process for thermoplastic resin, which uses a mold having a mold cavity with an internal shape which divides the injected resin into streams which subsequently reunite and weld together within the cavity, characterized by using a mold provided with at least one resin reservoir protruding therefrom adjacent to a region at which the streams reunite, the said resin reservoir having a retractable piston, and feeding molten resin into the mold to fill the cavity and form the weld while the piston is in a retracted or advanced state, and either advancing the piston toward the passageway to force resin from the resin reservoir into the cavity or retracting the piston to withdraw resin from the passageway into the resin reservoir so as to reinforce the weld by migration of the resin in the weld and wherein the movement of the piston for forcing the resin from the resin reservoir into the cavity or for withdrawing the resin from the cavity into the resin reservoir is conducted while the piston is vibrated.

Now, referring to the attached drawings, the injection molding process of the present invention will be further described.

Figure 1 is a view of a mold incorporating a resin reservoir for use in a process according to the present invention, wherein (a) is a schematic plan view and (b) is a schematic view of a section along line 1a-1a in (a).

Figure 2 is a view of another mold incorporating a resin reservoir for use in a process according to the present invention, wherein (a) is a schematic plan view and (b) is a schematic view of a section along line 2a-2a in (a).

Figure 3 is a schematic view of a section around the resin reservoir of a mold corresponding to one in Figure 1. It shows the operating parts of one form of a piston for forcing resin from the resin reservoir into the mold cavity or for withdrawing resin from the cavity into the resin reservoir.

Figures 4 to 10 are each a diagrammatic view of versions mold as shown in Figure 1, schematically showing the condition of injected resin in the case where the resin is forced from the resin reservoir into the mold cavity, again wherein (a) is a schematic plan view and (b) is a schematic view of a section corresponding to one along line 1a-1a in Figure 1.

In the Figures the reference numerals indicate repectively the following items.
- 1:: resin reservoir having a retractable piston
- 2:: runner
- 3:: gate
- 4:: cavity
- 5:: core
- 6:: fixed portion of the mold
- 7:: movable portion of the mold
- 8:: die plate of the molding machine
- 9:: pressure pin (piston)
- 10:: pressure plate
- 11:: pressure rod
- 12:: local pressuring device
- 13:: return pin
- 14:: forced retraction spring
- 15:: attachment for the movable portion of the mold
- 16:: side portion of the molding machine.

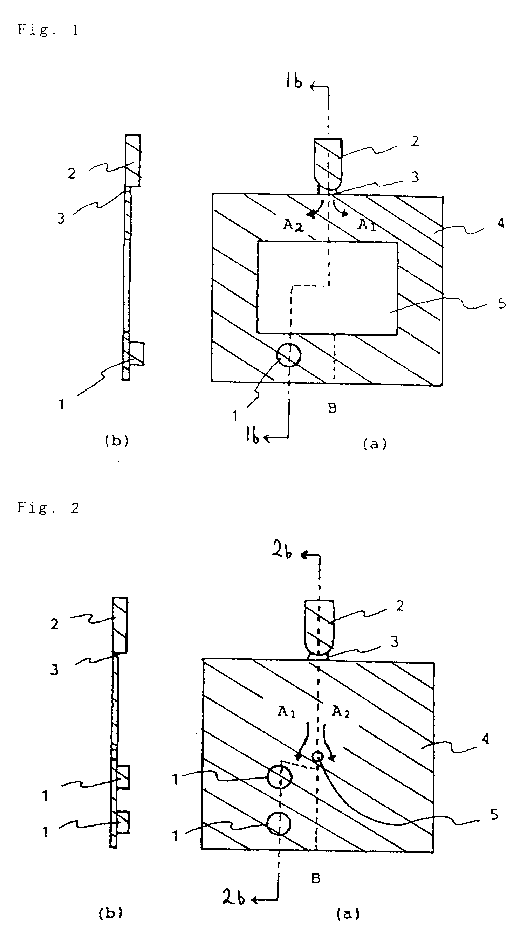

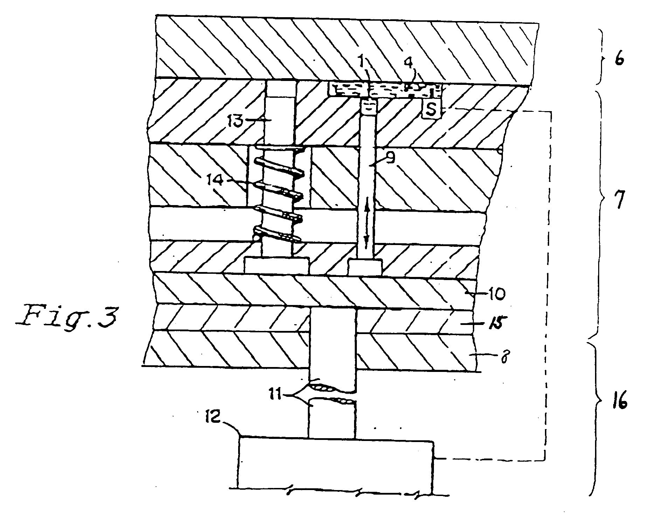

Figures 1 and 2 each show one mode of the mold (molding) according to the present invention which are improved over the conventional molds (moldings) in which welds are formed in respect of producing moldings having increased weld strength, the improvement comprising providing the mold with a resin reservoir (1) protruding from a mold cavity (4) in a preselected position, i.e., in at least one of divided resin passages ranging from the point where the injected molten resin is divided into two streams to a weld formed by the union of the resin streams. The resin reservoir (1) is provided with a retractable piston (9) - shown in Figure 3 but not in the other Figures - for either forcing the resin from the reservoir (1) into the cavity (4) or withdrawing the resin from the cavity (4) into the reservoir (1).

In practice molds such as those shown in Figures 1 and 2 are rare and both the way in which the molten resin is injected into the mold cavity and the process of the formation of welds are usually more complicated. However, fundamentally, the description made herein and set out below applies to any mold structure and injection molding process.

In the molding of a shaped article using a mold such as those illustrated, the injected molten resin is divided into two streams A1 and A2 in front of a core (5), and a weld is formed at a point B (see Figures 1 and 2) where the resin streams are united. In conventional molding this weld has the drawback that the fronts of the two divided resin streams meeting at the weld point merely abut each other as if they were closely adhered to each other. Not only the resin but also any filler contained in the resin is oriented across the weld without undergoing uniform mixing, so that the strength of the weld is poor.

By contrast, in the molding process using a mold of Figure 1 or Figure 2 provided with a resin reservoir (1) having a retractable piston (9) in a preselected position according to the present invention, one of the following procedures is employed to disturb the orientation of the resin and the filler at the weld so that the strength of the weld is improved. In one procedure, the molten resin is fed into the mold while the piston (9) is in a retracted state and is divided into two streams A1 and A2, which are united at a point B to form a weld. Thereafter, the piston is advanced toward the cavity (4) to force the resin from the resin reservoir (1) into the cavity (4) so as to cause a pressure difference between two sides of the weld to force the resin on one side not provided with a resin reservoir into the resin on the other side provided with a resin reservoir. In the other procedure, the molten resin is fed into the mold while the piston (9) is in an advanced state and is divided into streams, which are united to form a weld. Thereafter, the piston (9) is retracted to withdraw the resin from the cavity (4) into the resin reservoir (1) so as to cause a pressure difference between two sides of the weld to force the resin on one side not provided with a reservoir into the resin on the side which has a reservoir. The movement of the piston (9) for forcing the resin from the reservoir (1) into the cavity (4) or for withdrawing the resin from the cavity (4) into the resin reservoir is conducted while the piston (9) is vibrated. This vibration is preferably conducted at a cycle of 10 Hz or below.

In the above molding process, a system may be adopted in which a sensor S (see Figure 3) capable of detecting the condition of resin filling in the cavity (4) is provided in the mold or on a molding machine side and a hydraulic pressure device or the like is actuated in accordance with a detection signal from the sensor S regarding the condition of resin filling in the cavity to move the piston (9) for forcing the resin from the reservoir (1) into the cavity (4) or for withdrawing the resin from the cavity (4) into the reservoir (1). Such a sensor is not essential and instead a system may be adopted in which the time required to charge the old cavity with resin and to form a weld is previously measured and the movement of the piston (9) can be preselected and adjusted accordingly.

Figure 3 shows one example of the mold structure suitable for use in a process according to the present invention. In this structure, forcing of the resin from the resin reservoir (1) into the cavity (4) and withdrawal of the resin from the cavity (4) into the reservoir (1) are carried out by a pin-shaped piston (9). The advance of the piston (9) is performed by a local pressuring device (12) provided with vibration means. The retraction of the piston (9) is performed by a forced retraction spring (14). The pressuring device (12) is mounted on a movable platen (8), and is capable of vibrating and pressing a pressure plate (10) via a pressure rod (11). Retraction of the pressure plate (10) is performed by the spring (14) disposed in the mold so as for the pressure plate (10) to be forced toward the platen (8). Operational control of vibration timing, vibration frequency and vibration time is performed by the local pressuring device.

By the use of this device, it is feasible to control both a process in which the molten resin is injected while a resin reservoir is available by retracting a pin-shaped piston by means of a forced retraction spring so as to form a weld and then a vibrational force is applied by the local pressuring device through a pressure rod to a pressure plate and conveyed to a pin-shaped piston so that the piston is advanced to force the resin from the resin reservoir into the cavity, and a process in which the molten resin is injected into the mold while the pin-shaped piston is in an advanced state, through a pressure rod and a pressure plate, by the local pressuring device so as to form a weld and then the operation of the local pressuring device is discontinued, followed by retraction of the pin-shaped piston by means of a forced retraction spring, to thereby withdraw the resin from the cavity (4) into the resin reservoir.

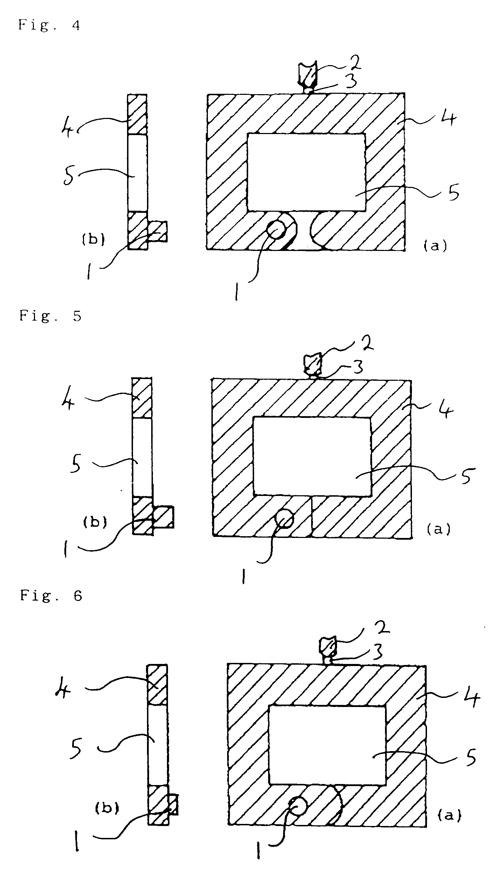

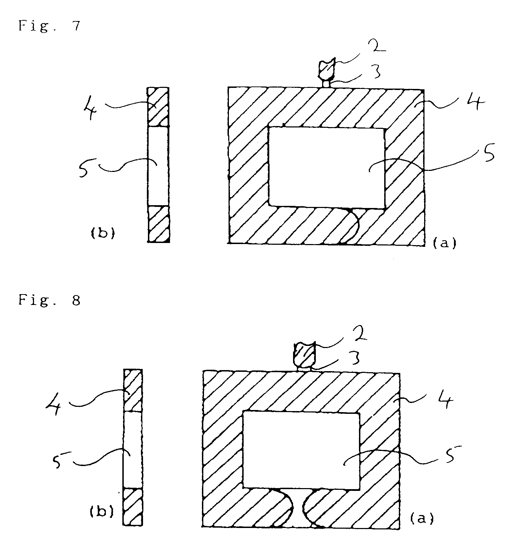

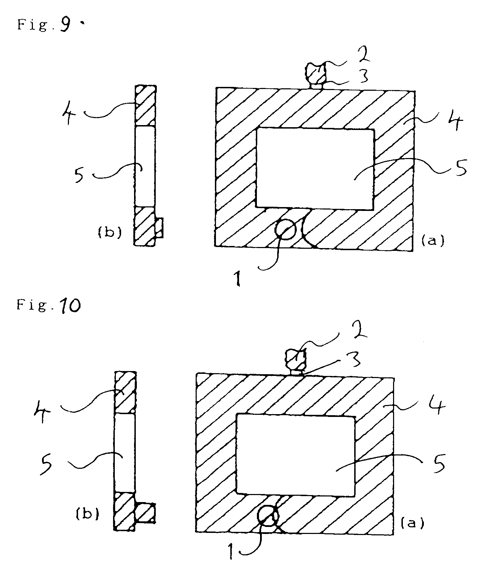

With respect to the timing for forcing the resin from the resin reservoir into the cavity or for withdrawing the resin from the cavity into the resin reservoir, it may be performed even several seconds after the formation of the weld, as long as the molten resin maintains its flowability to such an extent that the resin in the resin reservoir can be forced into the cavity or the resin in the cavity is flowable into the resin reservoir. However, it is preferably performed immediately after the formation of the weld, because the amount of the forced or withdrawn resin is large due to the high flowability of the resin, so that the improvement of the strength of the weld is promoted. Figs. 4 to 7 schematically show the change with time of the condition of injected resin in the case where the resin is forced from the reservoir (1) into the cavity (4). On the other hand, Figs. 8 to 10 schematically show the change with time of the condition of injected resin in the case where the resin is withdrawn from the cavity (4) into the reservoir (1).

In the mold for use in a process according to the present invention, a plurality of resin reservoirs may be provided. A plurality of reservoirs may be provided in both of divided resin passages although complicated forcing and withdrawal of the resin is required. However, it is generally preferred that they be provided in one of the divided passages along the weld.

In the mold for use in a process according to the present invention, the position and volume of the resin reservoir depends on the solidification rate of the resin, the volume of the molding as well as molding conditions, such as resin temperature, mold temperature and injection pressure, and hence cannot be specified irrespective of these factors. However, it is apparent that when the reservoir is positioned too apart from the weld or disposed in a position such that it partially overlaps the weld position, the amount of the resin forced from one side of the weld into the other side of the weld is decreased and thus diminishes the effect of improving the weld. If a reservoir is provided **at** the weld position to force the resin from the reservoir into the cavity or to withdraw the resin from the cavity into the reservoir, the effect of improving the strength of the weld due to the forcing of the resin from one side of the weld into the other side of the weld cannot be attained. Therefore, generally, a desirable position of the reservoir is at a distance of 1 to 10 mm from the weld.

The resin reservoir preferably has a capacity of at least 1/3 × L × S (mm³) , still preferably at least 1 × L × S (mm³), wherein L represents the distance (mm) from the weld to the reservoir and S represents the sectional area (mm²) of the molding along the weld. It is preferred that the capacity of the reservoir be not greater than 10% of the volume of the molding.

The injection molding process according to the present invention is applicable to the injection molding of any conventional thermoplastic resin. In particular, however, they are effectively applied to the resins from which moldings produced by the conventional injection molding processes inevitably have extremely poor weld strength. For example, moldings of crystalline resins, especially liquid crystalline polymers, produced by the conventional processes have extremely poor strength at welds as compared with those of other portions due to the orientation of the molecules on both sides of the weld, along the weld. However, when such crystalline resins are molded by the injection molding process and the mold according to the present invention, the above-mentioned orientation at the weld is effectively disturbed, so that the strength of the weld is satisfactorily improved.

Further, a molding of thermoplastic resins compounded with an inorganic filler, especially a fibrous filler, is likely to cause the same problem of poor weld strength due to the orientation of the inorganic filler, especially the fibrous filler along the weld. However, the injection molding process and the mold according to the present invention are applicable with extreme advantage to the molding of such filler compounded resins as well.

As will be apparent from the foregoing description, in the injection molding of a thermoplastic resin to obtain a molding which otherwise forms a weld having an extremely low strength, the injection molding process according to the present invention is highly advantageous in that the orientation of the resin and the filler at the weld is disturbed so that the weld is effectively reinforced in the resultant molding, and hence has high practical value. More specifically, the advantage is brought about by using a mold provided, in a preselected position, with a reservoir whose capacity can be changed by the advance and retraction of a piston under vibration by means of a local pressuring device or the like and either by advancing the piston toward the mold cavity side by means of the local pressuring device or the like to force the resin from the reservoir into the cavity after the formation of the weld by the feeding of the molten resin into the mold cavity, or by previously advancing the piston by means of the local pressuring device or the like and then, after the formation of the weld by the feeding of the molten resin into the mold cavity, retracting the piston to withdraw the resin from the cavity into the reservoir, thus causing the migration of the resin in the weld to thereby force the resin on one side of the weld into the resin on the other side of the weld.

### Examples

The present invention is described in greater detail with reference to the following Examples, which should not be construed to be limiting the scope of the present invention.

### Examples 1 - 2 and Comparative Example 1

A polyphenylene sulfide resin compounded with 40% by weight of glass fiber (GF) was injection molded using a mold for injection molding which had the configuration of Figure 1 and was provided with control means as shown in Figure 3.

The characteristics of the major portions of the employed mold and molding conditions were as follows:
dimension around molding weld: 10 mm in width x 1 mm in thickness,
dimension of reservoir: 5 mm in diameter x 3 mm in height, molding conditions: holding pressure of 49.0 MPa (500 kgf/cm²),
conditions for forcing the resin from the reservoir into the cavity: forcing pressure of 69.7 MPa (710 kgf/cm²), the forcing being initiated immediately after complete filling of the cavity, and
conditions for withdrawing the resin from the cavity into the reservoir: the capacity of the reservoir being zero at the time of filling of the cavity, the withdrawal being initiated immediately after complete filling of the cavity.

For comparison, injection molding was performed using a mold having no reservoir. The tensile strength was measured for each of the obtained moldings, and the results are shown in Table 1.

### Examples 3 - 4 and Comparative Example 2

Moldings were produced in substantially the same manner as in Examples 1 - 2 and Comparative Example 1, except that use was made of a liquid crystal polymer compounded with 30% by weight of glass fiber, and the flexural strength of each of the moldings was measured. The results are shown in Table 2.

**Table 1**

| | | Ex. 1 | Ex. 2 | Comp. Ex. 1 |
|---|---|---|---|---|
| | | resin forced into the cavity | resin withdrawn from the cavity | without resin reservoir |
| Tensile strength | (kgf/cm²)* (MPa) | 1600 | 1450 | 950 |
| | | 157.0 | 142.2 | 93.2 |

| | | | | |
|---|---|---|---|---|
| * 1 kgf/cm² = 0.0981 MPa | | | | |

**Table 2**

| | | Ex. 3 | Ex. 4 | Comp. Ex. 2 |
|---|---|---|---|---|
| | | resin forced into the cavity | resin withdrawn from the cavity | without resin reservoir |
| Flexural strength | (kgf/cm²)* (MPa) | 1840 | 1680 | 450 |
| | | 180.5 | 164.8 | 44.1 |

| | | | | |
|---|---|---|---|---|
| * 1 kgf/cm² = 0.0981 MPa | | | | |

## Claims

1. An injection molding process for thermoplastic resin, which uses a mold having a mold cavity (4) with an internal shape which divides the injected resin into streams which subsequently reunite and weld together within the cavity (4), characterized by using a mold provided with at least one resin reservoir (1) protruding therefrom adjacent to a region at which the streams reunite, the said resin reservoir (1) having a retractable piston (9), and feeding molten resin into the mold to fill the cavity and form the weld while the piston (9) is in a retracted or advanced state, and either advancing the piston (9) toward the passageway to force resin from the resin reservoir (1) into the cavity or retracting the piston (9) to withdraw resin from the passageway into the resin reservoir (1) so as to reinforce the weld by migration of the resin in the weld and wherein the movement of the piston (9) for forcing the resin from the resin reservoir (1) into the cavity (4) or for withdrawing the resin from the cavity (4) into the resin reservoir (1) is conducted while the piston (9) is vibrated.

2. An injection molding process according to Claim **1**, wherein the vibration is conducted at a cycle of 10 Hz or below.

3. An injection molding process according to either preceding claim, wherein the resin reservoir (1) has a capacity of at least 1/3 x L x S (mm³) wherein L represents the distance (mm) from the weld to the resin reservoir (1) and S(mm²) represents the sectional area of the molding along the weld.

4. An injection molding process according to any preceding claim, wherein the thermoplastic resin is a crystalline thermoplastic resin or a liquid crystalline polymer.

5. An injection molding process according to any preceding claim, wherein the thermoplastic resin is one containing an inorganic filler.

## Patentansprüche

1. Spritzgußverfahren für thermoplastisches Harz, bei dem eine Form mit einem Formhohlraum (4) mit einer inneren Gestalt verwendet wird, die das eingespritzte Harz in Ströme aufteilt, die sich anschließend wieder vereinigen und innerhalb des Hohlraums (4) miteinander verschweißen, dadurch gekennzeichnet, daß eine Form verwendet wird, die mit wenigstens einem Harzreservoir (1) versehen ist, das an einen Bereich angrenzend, in dem sich die Ströme wieder vereinigen, aus dieser herausragt, wobei das Harzreservoir (1) einen zurückziehbaren Kolben (9) aufweist und geschmolzenes Harz in die Form einführt, so daß der Hohlraum gefüllt und die Schweißstelle gebildet wird, während sich der Kolben (9) in einem zurückgezogenen oder vorgedrückten Zustand befindet, und den Kolben (9) entweder zum Durchgang vordrückt, um Harz aus dem Harzreservoir (1) in den Hohlraum zu drücken, oder den Kolben (9) zurückzieht, um Harz aus dem Durchgang in das Harzreservoir (1) zurückzuziehen, so daß die Schweißstelle durch Wanderung des Harzes in der Schweißstelle verstärkt wird, wobei die Bewegung des Kolbens (9) zum Drücken des Harzes aus dem Harzreservoir (1) in den Hohlraum (4) oder zum Zurückziehen des Harzes aus dem Hohlraum (4) in das Harzreservoir (1) durchgeführt wird, während der Kolben (9) in Schwingungen versetzt wird.

2. Spritzgußverfahren gemäß Anspruch 1, wobei die Schwingung mit einer Frequenz von 10 Hz oder darunter durchgeführt wird.

3. Spritzgußverfahren gemäß einem der vorstehenden Ansprüche, wobei das Harzreservoir (1) eine Kapazität von wenigstens 1/3 x L x S (mm³) hat, wobei L den Abstand (mm) von der Schweißstelle zum Harzreservoir (1) darstellt und S (mm²) die Querschnittsfläche des Formteils entlang der Schweißstelle darstellt.

4. Spritzgußverfahren gemäß einem der vorstehenden Ansprüche, wobei das thermoplastische Harz ein kristallines thermoplastisches Harz oder ein flüssigkristallines Polymer ist.

5. Spritzgußverfahren gemäß einem der vorstehenden Ansprüche, wobei das thermoplastische Harz einen anorganischen Füllstoff enthält.

## Revendications

1. Procédé de moulage par injection de résine thermoplastique, qui utilise un moule comportant une cavité de moule (4) présentant une forme interne qui divise la résine injectée en écoulements qui se réunissent ensuite et se soudent ensemble à l'intérieur de la cavité (4), caractérisé par les étapes consistant à utiliser un moule muni d'au moins un réservoir de résine (1) faisant saillie à partir de celui-ci à proximité d'une région au niveau de laquelle les écoulements se réunissent, ledit réservoir de résine (1) comportant un piston rétractable (9), et à introduire de la résine fondue dans le moule afin de remplir la cavité et de former la soudure tandis que le piston (9) est à l'état rentré ou avancé, et soit à faire avancer le piston (9) vers le passage afin de forcer de la résine depuis le réservoir de résine (1) jusque dans la cavité, soit à rentrer le piston (9) afin d'aspirer de la résine depuis le passage jusque dans le réservoir de résine (1) de manière à renforcer la soudure par migration de la résine dans la soudure, et dans lequel le déplacement du piston (9) afin de forcer la résine depuis le réservoir de résine (1) jusque dans la cavité (4) ou d'aspirer la résine depuis la cavité (4) jusque dans le réservoir de résine (1) est effectué tandis que l'on fait vibrer le piston (9).

2. Procédé de moulage par injection selon la revendication 1, dans lequel on fait vibrer le piston à une fréquence de 10 Hz ou au-dessous.

3. Procédé de moulage par injection selon l'une ou l'autre des revendications précédentes, dans lequel le réservoir de résine (1) présente une capacité d'au moins 1/3 x L x S (mm³) où L représente la distance (en mm) depuis la soudure jusqu'au réservoir de résine (1) et S (mm²) représente la surface en section du moulage le long de la soudure.

4. Procédé de moulage par injection selon l'une quelconque des revendications précédentes, dans lequel la résine thermoplastique est une résine thermoplastique cristalline ou un polymère cristallin à l'état liquide.

5. Procédé de moulage par injection selon l'une quelconque des revendications précédentes, dans lequel la résine thermoplastique est une résine contenant une charge minérale.
